(19) **Europäisches Patentamt / European Patent Office / Office européen des brevets**

(11) **EP 3 392 309 A1**

(12) **EUROPEAN PATENT APPLICATION**
published in accordance with Art. 153(4) EPC

(43) Date of publication:
**24.10.2018 Bulletin 2018/43**

(51) Int Cl.:
*C08L 71/02* (2006.01)      *B29C 67/00* (2017.01)
*B33Y 10/00* (2015.01)      *B33Y 70/00* (2015.01)
*C08K 3/22* (2006.01)      *C08K 3/30* (2006.01)

(21) Application number: **16875399.4**

(22) Date of filing: **30.11.2016**

(86) International application number:
**PCT/JP2016/085538**

(87) International publication number:
**WO 2017/104415 (22.06.2017 Gazette 2017/25)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **18.12.2015 JP 2015247393**
**09.03.2016 JP 2016046125**

(71) Applicant: **Ricoh Company, Ltd.**
**Tokyo 143-8555 (JP)**

(72) Inventor: **MIYAKE, Hirokazu**
**Tokyo 143-8555 (JP)**

(74) Representative: **Lamb, Martin John Carstairs**
**Marks & Clerk LLP**
**90 Long Acre**
**London WC2E 9RA (GB)**

(54) **WATER-DISINTEGRABLE COMPOSITE MATERIAL, AND METHOD FOR PRODUCING THREE-DIMENSIONAL MODEL**

(57) Water-disintegrable composite material either containing polyethylene oxide and satisfying A), B), and C), or additionally containing polyvinyl alcohol and satisfying A), B), D), and E).

A) When immersed in 25°C ion-exchanged water in fibrous shape sized 1.8 mm $\times$ 50 mm, shape disintegrates within 60 minutes.

B) Melt flow rate measured according to JIS K7210 at 190°C at 2.18 kg load is $\geq$0.5 g/10 minutes.

C) Water contents A and B in fibrous shape sized 1.8 mm $\times$ 5.0 mm satisfy formula: water content increasing ratio = [(B-A)/A]$\times$100$\leq$1%, A being measured after drying at 80°C for 2 hours and then leaving to stand at 23°C, 50% RH for 12 hours, B being measured after further leaving to stand at 30°C, 50% RH for 72 hours.

D) Tensile modulus and tensile elongation according to ICE60851 are $\geq$1.0 GPa and $\geq$10%.

E) Bend elastic constant according to JIS K7171 is $\geq$1.0 GPa.

EP 3 392 309 A1

**Description**

Technical Field

The present invention relates to a water-disintegrable composite material and a three-dimensional object producing method.

Background Art

Hitherto, application of water-disintegrable polymer compositions that in the environment of use, maintain the shapes into which the compositions are formed, and after use, transform into aqueous solutions or disintegrate in the presence of a certain amount or more of water have been attempted to, for example, packaging materials for, for example, foods, cosmetics, pharmaceuticals, and toiletries, and various building materials.

For example, there has been proposed a water-disintegrable polymer composition that contains a water-disintegrable thermoplastic polyvinyl alcohol and an electrolyte powder (for example, see Patent document 1). However, this water-disintegrable polymer composition has a very poor humidity resistance and may become tacky due to moisture absorption depending on the environment of use, and it may be difficult to use this water-disintegrable polymer composition as a shaped product.

In recent years, for example, fused deposition molding (FDM) methods have been known as techniques for mold-free production of three-dimensional stereoscopic objects. In the fused deposition molding methods, in the case of laminating layers of a resin for producing a three-dimensional object in an overhang shape that is at greater than 45 degrees from a vertical line, there may occur, for example, so-called "drooping", which is deformation or fluidization of the melted resin in the gravity direction, to make the shape unstable. Therefore, a support is formed with a water-soluble resin composition in order to stabilize the shape of the melded resin. After a three-dimensional object is formed, in order to remove the support, there has been made an attempt to immerse the three-dimensional object in water together with the support, to dissolve the support.

Citation List

Patent Document

Patent document 1: Japanese Unexamined Patent Application Publication No. 08-92453

Summary of Invention

Technical Problem

The present invention has an object to provide a water-disintegrable composite material having an excellent water-disintegrability, a good melt fluidity, and a good humidity resistance.

The present invention also has an object to provide a water-disintegrable composite material having an excellent water-disintegrability, a good moldability, a good bendability, a good melt fluidity, and a good mechanical strength.

Solution to Problem

A water-disintegrable composite material of the present invention as means of realizing the object described above either contains polyethylene oxide and satisfies all of A), B), and C) below, or contains polyethylene oxide and polyvinyl alcohol and satisfies all of A), B), D), and E) below.

A) When the water-disintegrable composite material having a fibrous shape having a diameter of 1.8 mm and a length of 50 mm is immersed in ion-exchanged water of 25 degrees C, the water-disintegrable composite material undergoes shape disintegration within 60 minutes.
B) A melt flow rate of the water-disintegrable composite material when measured according to a method described in JIS K7210, at a temperature of 190 degrees C, and at a load of 2.18 kg is greater than or equal to 0.5 g/10 minutes.
C) A water content A and a water content B of the water-disintegrable composite material having a fibrous shape having a diameter of 1.8 mm and a length of 5.0 mm satisfy a formula below.

$$\text{Water content increasing ratio} = [(B{-}A)/A] \times 100 \leq 1\%$$

The water content A is a water content of the water-disintegrable composite material after dried at 80 degrees C for 2 hours and then left to stand in an environment of 23 degrees C and 50% RH for 12 hours. The water content B is a water content of the water-disintegrable composite material after further left to stand in an environment of 30 degrees C and 50% RH for 72 hours.

D) Tensile modulus of the water-disintegrable composite material according to a method described in ICE60851 is 1.0 GPa or higher, and tensile elongation of the water-disintegrable composite material according to a method described in ICE60851 is 10% or higher.
E) Bend elastic constant of the water-disintegrable composite material according to a method described in JIS K7171 is 1.0 GPa or higher.

Effects of the Invention

The present invention has an object to provide a water-disintegrable composite material having an excellent water-disintegrability, a good melt fluidity, and a good humidity resistance.
The present invention can also provide a water-disintegrable composite material having an excellent water-disintegrability, a good moldability, a good bendability, a good melt fluidity, and a good mechanical strength.

Brief Description of the Drawings

FIG. 1 is a diagram illustrating an example of a producing apparatus configured to produce a water-disintegrable composite material of the present invention in a fibrous molded shape;
FIG. 2A is a plan view illustrating an example of a three-dimensional object produced by using a water-disintegrable composite material of the present invention as a support forming material;
FIG. 2B is a cross-sectional view of the three-dimensional object of FIG. 2A taken along a line A-A';
FIG. 2C is a schematic cross-sectional view illustrating an example of a step of removing a support of the three-dimensional object of FIG. 2A;
FIG. 3 is a schematic view illustrating an example of a three-dimensional object producing apparatus;
FIG. 4 is a schematic view illustrating another example of a three-dimensional object producing apparatus; and
FIG. 5 is a schematic view illustrating yet another example of a three-dimensional object producing apparatus.

Mode for Carrying out the Invention

(Water-disintegrable composite material)

A water-disintegrable composite material of the present invention contains polyethylene oxide or contains polyethylene oxide and polyvinyl alcohol, preferably further contains one or more selected from the group consisting of an inorganic compound, a binding agent, and a lubricant, and further contains other components as needed.
The water-disintegrable composite material either contains polyethylene oxide and satisfies all of A), B), and C) below, or contains polyethylene oxide and polyvinyl alcohol and satisfies all of A), B), D), and E) below.

A) When the water-disintegrable composite material having a fibrous shape having a diameter of 1.8 mm and a length of 50 mm is immersed in ion-exchanged water of 25 degrees C, the water-disintegrable composite material undergoes shape disintegration within 60 minutes.
B) A melt flow rate of the water-disintegrable composite material when measured according to a method described in JIS K7210, at a temperature of 190 degrees C, and at a load of 2.18 kg is greater than or equal to 0.5 g/10 minutes.
C) A water content A and a water content B of the water-disintegrable composite material having a fibrous shape having a diameter of 1.8 mm and a length of 5.0 mm satisfy a formula below.

$$\text{Water content increasing ratio} = [(B{-}A)/A] \times 100 \leq 1\%$$

The water content A is a water content of the water-disintegrable composite material after dried at 80 degrees C for 2 hours and then left to stand in an environment of 23 degrees C and 50% RH for 12 hours. The water content B is a water content of the water-disintegrable composite material after further left to stand in an environment of 30 degrees C and 50% RH for 72 hours.

    D) Tensile modulus of the water-disintegrable composite material according to a method described in ICE60851 is 1.0 GPa or higher, and tensile elongation of the water-disintegrable composite material according to a method described in ICE60851 is 10% or higher.
    E) Bend elastic constant of the water-disintegrable composite material according to a method described in JIS K7171 is 1.0 GPa or higher.

-Water-disintegrability of water-disintegrable composite material-

The water-disintegrable composite material has water-disintegrability that satisfies A) described above.
Specifically, the water-disintegrability of the water-disintegrable composite material can be confirmed as follows. The water-disintegrable composite material having a fibrous shape having a diameter of 1.8 mm and a length of 50 mm is immersed (or left to stand still) in 40 mL of ion-exchanged water poured in a 50 mL glass beaker for 60 minutes with the water temperature maintained at 25 degrees C. Then, the aqueous solution in the beaker is stirred with a stirring blade at 50 rpm for 30 seconds. This aqueous solution is passed through a mesh having a mesh size of 500 micrometers. The water-disintegrability of the water-disintegrable composite material can be confirmed visually based on presence or absence of solids in the ion-exchanged water.
The condition A) described above is preferably a condition that when the water-disintegrable composite material having a fibrous shape having a diameter of 1.8 mm and a length of 50 mm is immersed in ion-exchanged water of 25 degrees C, the water-disintegrable composite material undergoes shape disintegration within 30 minutes.

-Melt fluidity of water-disintegrable composite material-

The water-disintegrable composite material has melt fluidity that satisfies B) described above.
The melt flow rate of the water-disintegrable composite material is greater than or equal to 0.5 g/10 minutes, preferably greater than or equal to 1.0 g/10 minutes, and more preferably greater than or equal to 1.2 g/10 minutes. When the melt flow rate of the water-disintegrable composite material is greater than or equal to 0.5 g/10 minutes, there is an advantage that the viscosity of the water-disintegrable composite material during heating is not extremely high, so an extrusion molder is less likely to have troubles during production of a molded product of the water-disintegrable composite material.
The melt flow rate can be measured with, for example, a melt indexer (LMI5000, available from Dynisco, compliant with JIS K7210).

-Humidity resistance of water-disintegrable composite material-

The water-disintegrable composite material has humidity resistance that satisfies C) described above.
Specifically, the humidity resistance of the water-disintegrable composite material can be obtained as follows. First, a water content A of the water-disintegrable composite material having a fibrous shape having a diameter of 1.8 mm and a length of 100 mm is measured after the water-disintegrable composite material is dried in a hot-air drying furnace at 80 degrees C for 2 hours and then left to stand in an environment of 23 degrees C and 50% RH for 12 hours. A water content B of the water-disintegrable composite material is measured after the water-disintegrable composite material is subsequently further left to stand in an environment of 30 degrees C and 50% RH for 72 hours. Based on the water contents A and B measured in the manners described above, the water content increasing ratio of the water-disintegrable composite material can be calculated according to a formula below. The water content increasing ratio of the water-disintegrable composite material is 1% or lower, and preferably 0%. When the water content increasing ratio of the water-disintegrable composite material is 1% or lower, there is an advantage that the water-disintegrable composite material has a good humidity resistance.

$$\text{Water content increasing ratio } (\%) = [(B-A)/A] \times 100$$

The water content can be measured with a Karl Fischer moisture titrator while the water-disintegrable composite material is heated with a moisture vaporizing device.

-Moldability of water-disintegrable composite material-

The moldability of the water-disintegrable composite material is not particularly limited and may be appropriately selected depending on the intended purpose. It is preferable that the water-disintegrable composite material be moldable into, for example, a fibrous shape, a plate shape, and a film shape. It is more preferable that the water-disintegrable composite material be moldable into a fibrous shape because this makes it possible to produce a filament for producing a three-dimensional object described below.

The moldability of the water-disintegrable composite material can be confirmed by, for example, melting and kneading the water-disintegrable composite material with a kneading/extrusion molding evaluation tester, to see whether the water-disintegrable composite material can be molded into a fibrous shape having a diameter of 1.8 mm.

The melting/kneading temperature at which the water-disintegrable composite material is melted and kneaded is not particularly limited, may be appropriately selected depending on the intended purpose, and is preferably 160 degrees C or higher but 240 degrees C or lower and more preferably 180 degrees C or higher but 220 degrees C or lower.

-Bendability of water-disintegrable composite material-

The bendability of the water-disintegrable composite material is not particularly limited and may be appropriately selected depending on the intended purpose. It is preferable that when a molded product of the water-disintegrable composite material is bent according to a method described below, the bent portion not undergo at least any one of cracking and breaking.

As a method for confirming the bendability of the water-disintegrable composite material, first, the water-disintegrable composite material having a fibrous shape having a diameter of 1.8 mm and a length of 100 mm is bent by 360 degrees at the center of the longer direction followed by compression of the bent portion by fingers, and subsequently bent in an opposite direction followed by compression of the bent portion likewise, then to see whether at least any one of cracking and breaking occurs.

As a method for confirming at least any one of cracking and breaking, for example, there is a method of observing the bent portion with an optical microscope at an object lens magnification of $\times 10$ and an eyepiece lens magnification of $\times 5$.

-Mechanical strength of water-disintegrable composite material-

The tensile modulus of the water-disintegrable composite material according to a method described in ICE60851 is 1.0 GPa or higher.

The tensile elongation of the water-disintegrable composite material according to a method described in ICE60851 is 10% or higher.

The bend elastic constant of the water-disintegrable composite material according to a method described in JIS K7171 is 1.0 GPa or higher.

The tensile modulus and the tensile elongation of the water-disintegrable composite material according to the methods described in ICE60851 and the bend elastic constant of the water-disintegrable composite material according to the method described in JIS K7171 can be measured with, for example, a tensile tester (available from Shimadzu Corporation).

<Polyethylene oxide>

The polyethylene oxide as a water-soluble resin is a polymer that is produced by ring-opening polymerization of ethylene oxide and has both of water-solubility and thermoplasticity.

The weight average molecular weight of the polyethylene oxide is not particularly limited, may be appropriately selected depending on the intended purpose, and is preferably 50,000 or greater but 1,000,000 or less, more preferably 250,000 or greater but 1,000,000 or less, and yet more preferably 250,000 or greater but 400,000 or less. When the weight average molecular weight of the polyethylene oxide is in the preferable range, the water-disintegrable composite material has an adequate viscosity, leading to improvement of the moldability and the water-disintegrability of the water-disintegrable composite material.

The polyethylene oxide is not particularly limited and may be appropriately selected depending on the intended purpose. An appropriately synthesized product may be used, or a commercially available product may be used.

Examples of the commercially available product include ALKOX (registered trademark) L-6 (weight average molecular weight: from 50,000 through 80,000), ALKOX (registered trademark) L-8 (weight average molecular weight: from 80,000 through 100,000), ALKOX (registered trademark) L-11 (weight average molecular weight: from 100,000 through 160,000), ALKOX (registered trademark) R-150 (weight average molecular weight: from 120,000 through 170,000), ALKOX (registered trademark) R-400 (weight average molecular weight: from 170,000 through 250,000), ALKOX (registered trademark) R-1000 (weight average molecular weight: from 250,000 through 400,000), ALKOX (registered trademark) E-30 (weight average molecular weight: from 400,000 through 550,000), and ALKOX (registered trademark) E-45 (weight average molecular weight: from 600,000 through 1,000,000) (all available from Meisei Chemical Works, Ltd.). One of these commercially available products may be used alone or two or more of these commercially available products may be used in combination. Among these commercially available products, ALKOX (registered trademark) R-1000 is preferable in terms of water-disintegrability and melt fluidity.

The content of the polyethylene oxide is not particularly limited and may be appropriately selected depending on the intended purpose.

<Polyvinyl alcohol>

The polyvinyl alcohol can be produced by polymerizing a vinyl acetate monomer and saponifying the obtained polyvinyl acetate. In the saponification, using an alkali catalyst in a methanol solvent, hydroxyl groups are substituted for the acetic acid groups of the polyvinyl acetate. The water resistance of the polyvinyl alcohol to be obtained is affected by the amount of the hydroxyl groups to be substituted. The hydroxyl group moieties are hydrophilic and the acetic acid group moieties are hydrophobic, leading to an excellent surface acting property.

The average degree of polymerization and the degree of saponification of the polyvinyl alcohol can be appropriately adjusted with appropriate adjustment of the material vinyl acetate.

As the polyvinyl alcohol, an appropriately synthesized product may be used, or a commercially available product may be used.

Examples of the commercially available product include product name: POVAL JL-05E (available from Japan VAM & Poval Co., Ltd.).

The content of the polyvinyl alcohol is preferably 50 parts by mass or greater but 150 parts by mass or less and more preferably 80 parts by mass or greater but 130 parts by mass or less relative to 100 parts by mass of the polyethylene oxide.

When the content of the polyvinyl alcohol is in the preferable value range, mechanical strength such as tensile modulus, tensile elongation, and bend elastic constant can be improved.

<Inorganic compound>

When the inorganic compound is contained in the water-disintegrable composite material of the present invention, the weight of the inorganic compound adds to the polyethylene oxide, or to the polyethylene oxide and the polyvinyl alcohol when the polyethylene oxide, or the polyethylene oxide and the polyvinyl alcohol dissolve(s) in water, to accelerate dissolution of the polyethylene oxide, or the polyethylene oxide and the polyvinyl alcohol, leading to smooth disintegration of the shape of a molded product of the water-disintegrable composite material.

The inorganic compound is not particularly limited and may be appropriately selected depending on the intended purpose. Examples of the inorganic compound include titanium oxide, barium sulfate, zinc oxide, aluminum nitride, alumina, kaolin, barium titanate, silica, talc, clay, bentonite, magnesium carbonate, calcium carbonate, aluminum oxide, aluminum hydroxide, and mica. One of these inorganic compounds may be used alone or two or more of these inorganic compounds may be used in combination. Among these inorganic compounds, titanium oxide and barium sulfate are preferable in terms of water- disintegrability.

When the polyethylene oxide is used as a resin (without the polyvinyl alcohol), the content of the inorganic compound is preferably 100 parts by mass or greater, more preferably 100 parts by mass or greater but 200 parts by mass or less, and yet more preferably 100 parts by mass or greater but 150 parts by mass or less relative to 100 parts by mass of the polyethylene oxide. When the content of the inorganic compound is in the preferable range, there is an advantage that the water-disintegrability is improved and the molded product is less likely to undergo, for example, cracking by bending.

When the polyethylene oxide and the polyvinyl alcohol are used as resins, the content of the inorganic compound is preferably 50 parts by mass or less and more preferably 5 parts by mass or greater but 25 parts by mass or less relative to a total of 100 parts by mass of the polyethylene oxide and the polyvinyl alcohol. When the content of the inorganic compound is in the preferable range, there is an advantage that the water-disintegrability is improved and the molded product is less likely to undergo, for example, cracking by bending.

Examples of the shape of the inorganic compound include a powdery shape, a grainy shape, a grainy shape, and a scaly shape.

The inorganic compound may be surface-treated with a surface treating agent.

The number average particle diameter of the primary particles of the inorganic compound is not particularly limited, may be appropriately selected depending on the intended purpose, and is preferably 1 micrometer or greater but 100 micrometers or less and more preferably 5 micrometers or greater but 50 micrometers or less. When the number average particle diameter of the primary particles of the inorganic compound is in the preferable range, there is an advantage that the melt viscosity of the water-disintegrable composite material is not high, and the inorganic compound has a good dispersibility.

<Binding agent>

When the binding agent is contained in the water-disintegrable composite material of the present invention, increase in the content of the inorganic compound relative to the content of the polyethylene oxide does not lead to decrease of the bendability of the molded product. This makes it possible to reduce occurrence of, for example, cracking by bending.

The binding agent is not particularly limited and may be appropriately selected depending on the intended purpose. Examples of the binding agent include hydroxypropyl cellulose, carboxymethyl cellulose, methyl cellulose, ethyl cellulose, isopropyl cellulose, hydroxymethyl cellulose, hydroxyethyl cellulose, hydroxypropylmethyl cellulose, cyanoethyl cellulose, ethyl-hydroxyethyl cellulose, starch, dextrin, pullulan, gum Arabic, tragacanth gum, lactose, cellulose, lecithin, sorbitol, sucrose fatty acid ester, alginic acid, calcium phosphate, and gum Arabic.

One of these binding agents may be used alone or two or more of these binding agents may be used in combination. Among these binding agents, hydroxypropyl cellulose is preferable in terms of moldability and bendability.

The content of the binding agent is not particularly limited, may be appropriately selected depending on the intended purpose, and is preferably 1 part by mass or greater but 10 parts by mass or less and more preferably 5 parts by mass or greater but 10 parts by mass or less relative to 100 parts by mass of the polyethylene oxide, or the polyethylene oxide and the polyvinyl alcohol. When the content of the binding agent is in the preferable range, there is an advantage that increase in the content of the inorganic compound relative to the content of the polyethylene oxide, or the polyethylene oxide and the polyvinyl alcohol does not lead to decrease of the bendability of the molded product, to make it possible to reduce occurrence of, for example, cracking by bending.

<Lubricant>

Addition of the lubricant in the water-disintegrable composite material of the present invention makes the melt flow rate value high, leading to an improved melt fluidity upon heating. Therefore, when a strong pressure is needed for, particularly, extrusion molding, it is possible to prevent breakdown of the extrusion molder due to the overload.

The lubricant is not particularly limited and may be appropriately selected depending on the intended purpose. Examples of the lubricant include glycerin fatty acid ester, diglycerin fatty acid ester, higher alcohol fatty acid ester, hydrogenated castor oil, fatty acid amide, fatty acid amine, alkylene bis fatty acid amide, Japan wax, carnauba wax, spermaceti, beeswax, lanolin, solid polyethylene glycol, silicon dioxide, calcium stearate, and magnesium stearate. One of these lubricants may be used alone or two or more of these lubricants may be used in combination. Among these lubricants, hydrogenated castor oil and glycerin fatty acid ester are preferable in terms of melt fluidity.

The content of the lubricant is not particularly limited, may be appropriately selected depending on the intended purpose, and is preferably 1 part by mass or greater but 30 parts by mass or less, more preferably 1 part by mass or greater but 10 parts by mass or less, and yet more preferably 1 part by mass or greater but 5 parts by mass or less relative to 100 parts by mass of the polyethylene oxide, or the polyethylene oxide and the polyvinyl alcohol. When the content of the lubricant is in the preferable range, there is an advantage that the melt flow rate value is high, leading to an improved melt fluidity upon heating

<Other components>

The other components are not particularly limited and may be appropriately selected depending on the intended purpose. Examples of the other components include any other resin than the polyethylene oxide and the polyvinyl alcohol, a coloring material, a dispersant, and a plasticizer.

The any other resin is not particularly limited and may be appropriately selected depending on the intended purpose. Examples of the any other resin than the polyethylene oxide and the polyvinyl alcohol include polyacrylic acid, polyethylene-acrylic acid, polysarcosine, polyoxyethylene, poly N-vinyl pyrrolidone, and polyvinyl acetate.

<Applications>

The applications of the water-disintegrable composite material of the present invention are not particularly limited, and the water-disintegrable composite material can be used for various applications. Examples of the applications include packaging materials for foods, cosmetics, pharmaceuticals, flagrances, and fertilizers. Other examples of the applications include a support forming material used during production of a three-dimensional object as a fibrous filament for producing a three-dimensional object.

<Method for producing water-disintegrable composite material>

The method for producing the water-disintegrable composite material of the present invention include an extrusion molding step and a cooling/solidifying step, and further includes other steps as needed.

-Extrusion molding step-

The extrusion molding step is a step of melting and kneading the water-disintegrable composite material obtained by mixing the polyethylene oxide or the polyethylene oxide and the polyvinyl alcohol, the inorganic compound, the binding agent, and the lubricant, and extrusion-molding the melted/kneaded water-disintegrable composite material into a fibrous shape.

The extrusion molding step can be suitably performed by a melting/kneading/extruding unit.

Examples of the extrusion molding unit include a single-screw extruder, a twin screw extruder, and a melt molder.

The method for melting and mixing is not particularly limited and may be appropriately selected from known methods depending on the intended purpose. Examples of the method include a method of melting and mixing the components continuously with a twin screw extruder, a single-screw extruder, or a melt extruder, or a method of melting and mixing the components batchwise with, for example, a kneader or a mixer.

-Cooling/solidifying step-

The cooling/solidifying step is a step of cooling and solidifying the fibrous water-disintegrable composite material obtained by extrusion molding.

The cooling/solidifying step can be suitably performed by, for example, a belt-type conveyor capable of stretching and conveying the fibrous extrusion-molded product while blowing the fibrous extrusion-molded product with dry air.

-Other steps-

The other steps are not particularly limited and may be appropriately selected depending on the intended purpose. Examples of the other steps include a wind-up step and a controlling step.

The wind-up step is a step of winding up the water-disintegrable composite material cooled and solidified in the cooling/solidifying step. The wind-up step can be suitably performed by a winder.

An example of a producing apparatus configured to produce the water-disintegrable composite material of the present invention in a fibrous molded shape will be described with reference to a drawing.

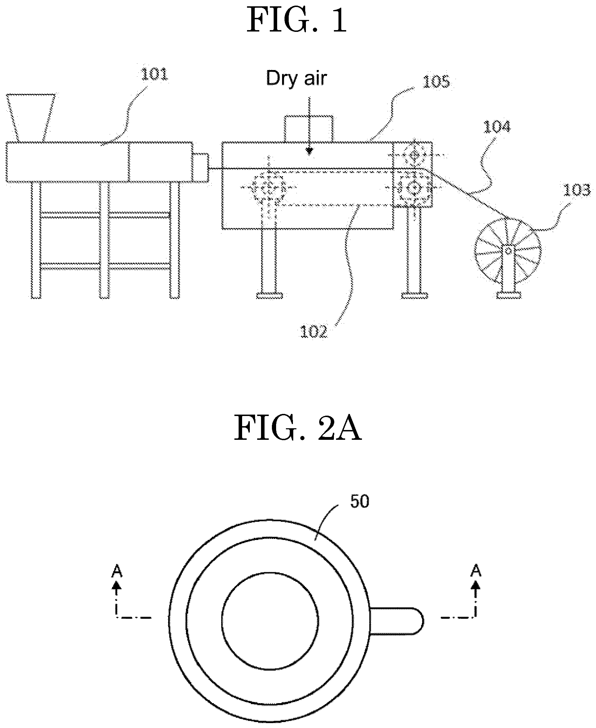

FIG. 1 is a diagram illustrating an example of a producing apparatus configured to produce the water-disintegrable composite material of the present invention in a fibrous molded shape.

As illustrated in FIG. 1, a water-disintegrable composite material 104 discharged from a melting/kneading extruder 101 is fed to a belt-type conveyor 102 covered with a dome 105. The belt of the belt-type conveyor 102 also has tackiness so as not for the fibrous water-soluble disintegrable composite material to slip. Stainless steel 304 is used as a base material of the belt. After the surface of the base material is coated with a silicone resin, the surface of the belt is calendered. This enables the fibrous water-soluble disintegrable composite material to follow the belt conveying speed and to be stretched in an arbitrary manner. This enables adjustment of the diameter.

The dome 105 is supplied with dry air and provided with a mechanism configured to cool and solidify the water-disintegrable composite material by the dry air, in order for the water-disintegrable composite material to maintain a fibrous shape. Water bathing is employed for cooling and solidifying a resin composition that is not the water-disintegrable composite material in order to maintain such a resin composition in a fibrous shape. When the same treatment is applied to the water-disintegrable composite material, it immediately becomes difficult for the water-disintegrable composite material to maintain the shape.

Subsequently, the fibrous water-disintegrable composite material is wound up around a core by the winder 103.

Next, a three-dimensional object producing method using the fibrous water-disintegrable composite material as a filament for producing a three-dimensional object will be described.

(Three-dimensional object producing method and three-dimensional object producing apparatus)

A three-dimensional object producing method of the present invention is a method for producing a three-dimensional object using the water-disintegrable composite material of the present invention, preferably includes a step of producing a three-dimensional object using the water-disintegrable composite material and a step of applying water to the three-dimensional object to dissolve and remove a part of the three-dimensional object, and further includes other steps as needed.

A three-dimensional object producing apparatus used in the present invention includes a unit configured to produce a three-dimensional object using the water-disintegrable composite material of the present invention, preferably includes a unit configured to apply water to the three-dimensional object to dissolve and remove a part of the three-dimensional object, and further includes other units as needed.

The three-dimensional object producing method of the present invention can be suitably performed by the three-dimensional object producing apparatus.

In another mode, the three-dimensional object producing method of the present invention includes a step of producing a three-dimensional object and a support for supporting the three-dimensional object and a step of immersing the obtained three-dimensional object and the support in water to disintegrate and remove the support, and the support may be formed using the water-disintegrable composite material of the present invention.

In another mode, the three-dimensional object producing apparatus includes a unit configured to produce the three-dimensional object and a support for supporting the three-dimensional object and a unit configured to immerse the obtained three-dimensional object and the support in water to disintegrate and remove the support.

The method for producing the three-dimensional object using the filaments for producing a three-dimensional object is not particularly limited, and a known fused deposition molding (FDM)-type three-dimensional object producing apparatus may be appropriately selected depending on the intended purpose. Examples of the method include a method of using a printer for producing a three-dimensional object as the three-dimensional object producing apparatus to melt the filament for producing a three-dimensional object and discharge the filament for producing a three-dimensional object in a scanning manner to form a layer of a material for producing a three-dimensional object having a predetermined shape and a layer of a support forming material and repeating this operation to laminate layers.

The dimensional accuracy of the three-dimensional object is not particularly limited and may be appropriately selected depending on the intended purpose. When a test object piece having a vertical size of 50 mm, a horizontal size of 50 mm, and a thickness of 4 mm is produced with the filaments for producing a three-dimensional object using the three-dimensional object producing apparatus according to, for example, ISO 175 (JIS K7114), the dimensional accuracy is preferably within $\pm 10\%$. The dimensions of the three-dimensional object can be measured with, for example, a pair of Vernier calipers.

<Filament for producing three-dimensional object>

The filament for producing a three-dimensional object can be used as a material for producing a three-dimensional object and a support forming material (for supporting a three-dimensional object) in production of a three-dimensional object. Of these materials, the support forming material (for supporting a three-dimensional object) is a preferable application of the filament for producing a three-dimensional object.

The filament for producing a three-dimensional object can be suitably used in a fused deposition molding (FDM)-type three-dimensional object producing apparatus.

The diameter of the filament for producing a three-dimensional object is not particularly limited, may be appropriately selected depending on the intended purpose, and is preferably 1 mm or greater but 5 mm or less and more preferably 1.75 mm or greater but 3 mm or less.

-Method for producing filament for producing three-dimensional object-

The method for producing the filament for producing a three-dimensional object is not particularly limited and may be appropriately selected from known methods depending on the intended purpose, so long as the method is a method for molding the water-disintegrable composite material into a fibrous shape. The diameter of the filament for producing a three-dimensional object can be controlled based on, for example, an extrusion hole of a single-screw extruder, a temperature condition, and a tensile condition of winding. Furthermore, it is also possible to heat the filament again after the cooling and stretch the filament with adjustment of the tensile condition of winding.

The method for melting and mixing is not particularly limited and may be appropriately selected from known methods depending on the intended purpose. Examples of the method include a method of melting and mixing the components continuously with, for example, a twin screw extruder, a single-screw extruder, or a melt extruder, or a method of melting and mixing the components batchwise with, for example, a kneader or a mixer. The melting/mixing step can be skipped when no additives are contained.

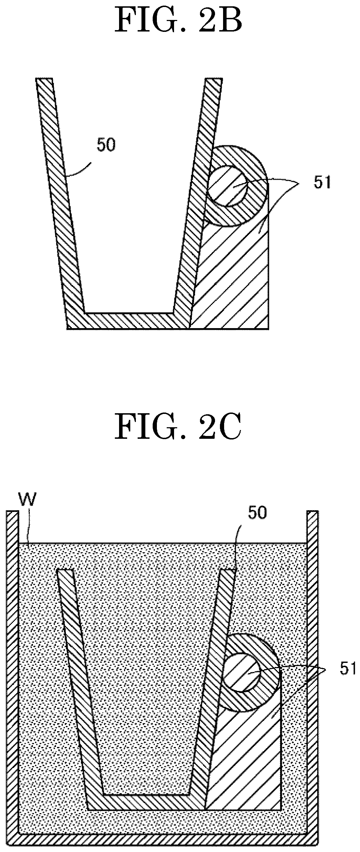

FIG. 2A is a plan view illustrating an example of a three-dimensional object produced by using the water-disintegrable composite material of the present invention as a support forming material. FIG. 2B is a cross-sectional view of the three-dimensional object of FIG. 2A taken along a line A-A'. FIG. 2C is a schematic cross-sectional view illustrating an example of a step of removing a support of the three-dimensional object of FIG. 2A.

In the case of using the filaments for producing a three-dimensional object formed of a water-insoluble resin for production of a three-dimensional object, a printer for producing a three-dimensional object mounted with 2 or more melting heads may be used, so the material for producing a three-dimensional object may be used in one of the melting heads and the support forming material may be used in another one of the melting heads. Using the printer for producing a three-dimensional object to melt and discharge each of the materials with the melting heads, it is possible to form a layer for a support portion having a predetermined shape and a layer for a three-dimensional object portion, and repeatedly perform this operation to laminate layers. In this way, a three-dimensional object 50 can be obtained. That is, the three-dimensional object 50 formed of the material for producing a three-dimensional object has a shape corresponding to at least a part of the shape of the support forming material 51 (see FIG. 2B). By immersion in water W, the support forming material disintegrates and can be easily removed from the three-dimensional object. Hence, the three-dimensional object with little damage and little residue of the support forming material can be obtained.

A specific embodiment of the three-dimensional object producing method and the three-dimensional object producing apparatus of the present invention will be described below.

A three-dimensional object will be obtained, using the filament for producing a three-dimensional object of the present invention as the material for producing a three-dimensional object and the support forming material.

As described above, in order to obtain a three-dimensional object, the material for producing a three-dimensional object (hereinafter may also be referred to as "material for producing a soft object") is allocated for the object portion, and the support forming material (hereinafter may also be referred to as "material for producing a hard object") is allocated for the support portion.

In the three-dimensional object producing apparatus, the material for producing a three-dimensional object and the support forming material are conveyed in the state of filaments to heating heads through conveying tubes. The conveyed material for producing a three-dimensional object and support forming material are heated and dissolved in the heating heads, and discharged to form a layer of the material for producing a three-dimensional object and a layer of the support forming material. Through repetition of this operation, a three-dimensional object can be produced by laminated object manufacturing.

The heating temperature in the heating heads is not particularly limited and may be appropriately selected depending on the intended purpose so long as the filament for producing a three-dimensional object can be dissolved.

First, surface data or solid data representing a three-dimensional shape designed by three-dimensional CAD or a three-dimensional shape scanned with a three-dimensional scanner or a digitizer is converted into a STL format and input to the three-dimensional object producing apparatus.

Based on the input data, an object producing orientation for producing a three-dimensional shape to be produced is determined. The object producing orientation is not particularly limited, and, typically, an orientation that has the smallest size in the Z-direction (height direction) is selected.

After the object producing orientation is determined, the projected areas of the three-dimensional shape on an X-Y plane, an X-Z plane, and a Y-Z plane are obtained. In order to reinforce the obtained block shape, the surfaces of the block shape except for the top surface in the X-Y plane are shifted outward by an appropriate distance. The distance by which the surfaces are shifted is not particularly limited and is different depending on the shape, the size, and a liquid material used, but is about 1 mm or longer but 10 mm or shorter. In this way, a block shape enclosing the shape to be produced (with the top surface opened) is specified.

This block shape is sliced in the Z-direction at intervals determined by the average thickness of 1 layer. The average thickness of 1 layer is different depending on the material used and cannot be defined flatly, but is preferably 10 micrometers or greater but 50 micrometers or less.

When there is 1 three-dimensional object to be produced, this block shape is disposed in the center of a Z stage (which is an object placing table that is configured to lift down by a distance corresponding to 1 layer every time 1 layer is formed). In the case of producing a plurality of objects simultaneously, block shapes are disposed on the Z stage, or alternatively, the block shapes may be stacked one upon another. These operations of block shaping, slice data (contour data) generation, and Z stage positioning may be automated with designation of the material to be used.

Next, in an object producing step, the position to which the material for producing a three-dimensional object is discharged and the position to which the support forming material is discharged are controlled by inside-outside judgment based on the outermost contour line in the slice data (for judging which of the material for producing a three-dimensional object and the support forming material is to be discharged to a position on the contour line).

The discharging order is to discharge the support forming material for forming a support layer first, and then discharge the material for producing a three-dimensional object for producing an object layer next.

In this discharging order, a reservoir such as a groove or a dam is formed first with the support, and the material for producing a three-dimensional object is discharged into the reservoir. This eliminates the risk of "drooping" even if a material that is liquid at normal temperature is used as the material for producing a three-dimensional object, and enables a wide-range use of, for example, photocurable resins and thermosetting resins.

In order to further reduce the object producing time, a preferable method is to laminate layers by discharging both of the material for producing a three-dimensional object and the support forming material on both of the outward path and the homeward path of an integrated inkjet head.

Further, high-speed object production is available by positioning an active energy ray irradiator to adjoin the heating head configured to discharge the material for producing a three-dimensional object.

In order to smooth a layer formed for producing a three-dimensional object, a smoothing treatment is performed immediately after a curing treatment is performed.

The smoothing treatment is for smoothing the surface of a cured film using a smoothing member such as a roller and a blade. This improves the accuracy of each layer, and enables accurate production of a three-dimensional object as a whole.

Here, in order to reduce the layer lamination time and improve smoothness of the layers, it is preferable to position the smoothing member to adjoin an ultraviolet ray irradiator.

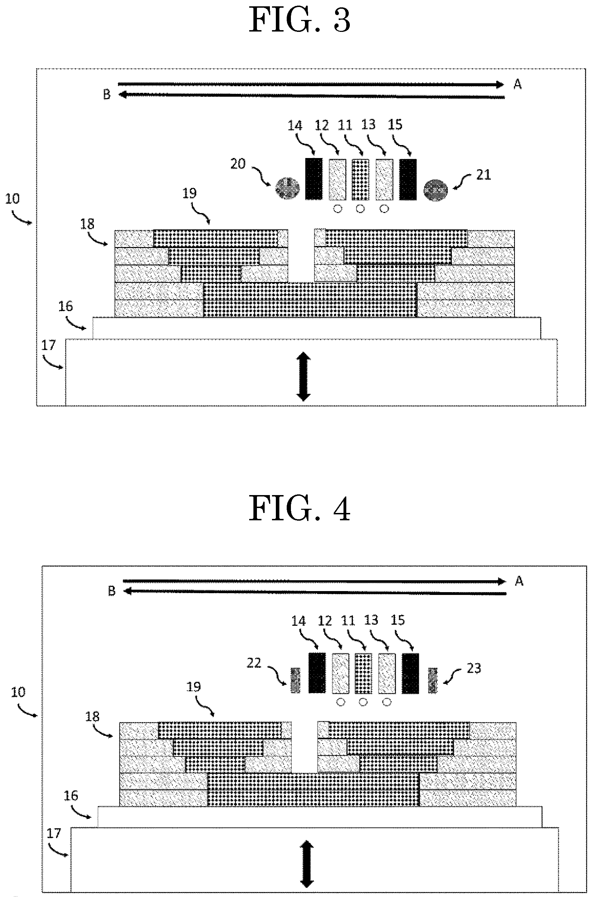

FIG. 3 is a schematic view illustrating an example of a three-dimensional object producing apparatus.

As illustrated in FIG. 3, using a head unit in which inkjet heads are arranged, a three-dimensional object producing apparatus 10 is configured to laminate layers by discharging the material for producing a three-dimensional object from an object material discharging head unit 11, discharging the support forming material from support forming material discharging head units 12 and 13, and curing the material for producing a three-dimensional object with adjoining ultraviolet ray irradiators 14 and 15.

That is, the support forming material is discharged from the heating heads (support material discharging head units 12 and 13) and solidified to form a first support layer including a reservoir. The material for producing a three-dimensional object is discharged into the reservoir of the first support layer from the inkjet head (object material discharging head unit 11) and irradiated with an active energy ray to be cured. Subsequently, a smoothing treatment is applied to the cured film by smoothing members (rollers 20 and 21), to form a first object layer.

Next, the support forming material that is melted is discharged onto the first support layer and solidified to laminate a second support layer including a reservoir. The material for producing a three-dimensional object is discharged into the reservoir of the second support layer and irradiated with an active energy ray to laminate a second object layer on the first object layer. A smoothing treatment is further applied, to produce a three-dimensional object 19.

When the multi-head unit moves in the direction of an arrow A, basically, a support 18 and the object 19 are formed on an object support substrate 16, using the support material discharging head unit 12, the object material discharging head unit 11, and the ultraviolet ray irradiator 15. Simultaneously, the support 18 and the object 19 are smoothed with the smoothing member 21 having a roller shape. The liquid support material discharging head unit 13 and the ultraviolet ray irradiator 14 may be used supplementarily.

When a smoothing member having a roller shape is used, rotating the roller in the reverse direction from the operating direction enables more effective functioning of the smoothing effect.

When the multi-head unit moves in the direction of an arrow B, basically, the support 18 and the object 19 are formed on the object support substrate 16, using the support material discharging head unit 13, the object material discharging head unit 11, and the ultraviolet ray irradiator 14. Simultaneously, the support 18 and the object 19 are smoothed with the smoothing member 20 having a roller shape. The support material discharging head unit 12 and the ultraviolet ray irradiator 15 may be used supplementarily.

Moreover, in order to maintain the material discharging head units 11, 12, and 13 and the ultraviolet ray irradiators 14 and 15 at a constant gap from the object 19 and the support 18, layer lamination is performed while the stage 17 is lifted down in accordance with the number of times of layer lamination.

FIG. 4 is a schematic view illustrating another example of a three-dimensional object producing apparatus. Specifically, the smoothing members 20 and 21 of FIG. 3 having a roller shape are changed to smoothing members 22 and 23 having a blade shape. When the surface of the object is to be scraped for smoothing, use of the smoothing members of FIG. 4 having a blade shape is more effective than the smoothing members having a roller shape used in FIG. 3.

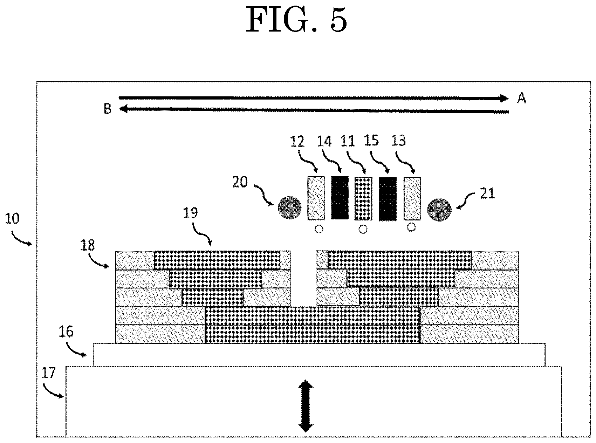

FIG. 5 is a schematic view illustrating yet another example of a three-dimensional object producing apparatus, illustrating another example of a three-dimensional object producing step capable of improving the smoothness of each layer better than in FIG. 3. The basic step is the same as in FIG. 3, but the difference is that the ultraviolet ray irradiator 14 or 15 is arranged between the object material discharging head 11 and the support material discharging head 12 or 13.

In the three-dimensional object producing apparatus 10 of this type, the ultraviolet ray irradiators 14 and 15 are used in moving in the directions of both of the arrows A and B. The surface of a laminated layer of the support forming material is smoothed by the heat generated along with the ultraviolet ray irradiation. As a result, the dimensional stability of the object is improved.

The three-dimensional object producing apparatus 10 may additionally include, for example, a liquid collecting mechanism and a recycling mechanism. The three-dimensional object producing apparatus may also include a blade configured to remove a liquid material that has adhered to a nozzle surface and a mechanism configured to detect a nozzle that has failed in discharging. Furthermore, it is also preferable to control an environmental temperature in the three-dimensional object producing apparatus during production of a three-dimensional object.

Examples

The present invention will be described below by way of Examples. The present invention should not be construed as being limited to these Examples.

(Example 1)

<Production of water-disintegrable composite material>

Polyethylene oxide (ALKOX (registered trademark) R-1000, available from Meisei Chemical Works, Ltd.) (100 parts by mass), titanium oxide as an inorganic compound (R-62N, available from Sakai Chemical Industry Co., Ltd.) (100 parts by mass), hydroxypropyl cellulose as a binding agent (SSL, available from Nippon Soda Co., Ltd.) (10 parts by mass), and hydrogenated castor oil as a lubricant (P-85, available from Kao Corporation) (1 part by mass) were put in a plastic container having a volume of 2,000 mL, and mixed and stirred with a big rotor (BR-2, available from As One Corporation) at 10 rpm for 1 hour. Subsequently, with a kneading/extrusion molding evaluation tester (LABPLAST MILL: available from Toyo Seiki Seisaku-Sho, Ltd.), the obtained mixture was melted and kneaded at a screw rotation number of 15 rpm at a cylinder temperature of 160 degrees C, and extrusion-molded into a fibrous shape having a diameter of 1.8 mm. Next, the fibrous extrusion-molded product was stretched and conveyed while being cooled and solidified with dry air, and wound up around a core with a winder produced in-house. In this way, a fibrous water-disintegrable composite material 1 was obtained.

Next, various properties of the obtained water-disintegrable composite material 1 were evaluated in the manners described below. The results are presented in Table 1-1.

-Evaluation of moldability-

Moldability when the mixture was melted and kneaded with the kneading/extrusion molding evaluation tester at a screw rotation number of 15 rpm at a cylinder temperature of 160 degrees C was evaluated according to the criteria described below.

[Evaluation criteria]

B: The mixture was able to be molded into a fibrous shape having a diameter of 1.8 mm.
D: The mixture was not able to be molded into a fibrous shape having a diameter of 1.8 mm.

-Evaluation of bendability-

The obtained fibrous water-disintegrable composite material 1 was cut to have a length of 100 mm and bent by 360 degrees at the center of the longer direction, followed by compression of the bent portion by fingers, and then bent in an opposite direction, followed by compression likewise. The bent portion was observed with an optical microscope (BX51, available from Olympus Corporation) at an object lens magnification of ×10 and an eyepiece lens magnification of ×5, and evaluated according to the criteria described below.

[Evaluation criteria]

   B: At least one of cracking and breaking was not observed.
   C: Minute cracks were observed at some part, but were not problematic in practical use.
   D: At least one of cracking and breaking was observed.

-Evaluation of melt fluidity-

The melt flow rate of the obtained fibrous water-disintegrable composite material 1 was measured with a melt indexer (LMI5000, available from Dynisco, compliant with JIS K7210) at a temperature of 190 degrees C at a load of 2.18 kg, and evaluated according to the criteria described below.

[Evaluation criteria]

B: The melt flow rate was greater than or equal to 1.0 g/10 minutes.
C: The melt flow rate was greater than or equal to 0.5 g/10 minutes but less than 1.0 g/10 minutes.
D: The melt flow rate was less than 0.5 g/10 minutes.

-Evaluation of humidity resistance-

The obtained fibrous water-disintegrable composite material 1 was cut to have a length of 50 mm, dried in a hot-air drying furnace (VACUUM DRYING OVEN DP300, available from Yamato Scientific Co., Ltd.) at 80 degrees C for 2 hours, and subsequently left to stand in a thermo-hygrostat chamber at 23 degrees C at 50% RH for 12 hours. Next, the fibrous water-disintegrable composite material having been left to stand was heated with a moisture vaporizing device (ADP-611, available form Kyoto Electronics Manufacturing Co., Ltd.) set to 190 degrees C, to measure a water content A with a Karl Fischer moisture titrator (MCK-610, available from Kyoto Electronics Manufacturing Co., Ltd.). Subsequently, the obtained fibrous water-disintegrable composite material was further left to stand in the thermo-hygrostat chamber in an environment of 30 degrees C and 50% RH for 72 hours, and again heated with the moisture vaporizing device (ADP-611, available from Kyoto Electronics Manufacturing Co., Ltd.) set to 190 degrees C, to measure a water content B with a Karl Fischer moisture titrator (MCK-610, available from Kyoto Electronics Manufacturing Co., Ltd.). Based on the water contents A and B, the water content increasing ratio of the water-disintegrable composite material was calculated according to a formula below, and evaluated according to the criteria described below.

$$\text{Water content increasing ratio } (\%) = [(B-A)/A] \times 100$$

[Evaluation criteria]

B: The water content increasing ratio was 1% or lower.
D: The water content increasing ratio was higher than 1%.

-Evaluation of dimensional accuracy of three-dimensional object-

Using the obtained fibrous water-disintegrable composite material 1 as a filament for producing a three-dimensional object, a test object piece 1 having a vertical size of 50 mm, a horizontal size of 50 mm, and a thickness of 4 mm was produced with a 3D printer (PRN3D, available from Micro Factory Corp.) set at a nozzle temperature of 220 degrees C and a bed temperature of 30 degrees C according to ISO 175 (JIS K7114). The obtained test object piece 1 was taken out from the 3D printer, and the dimensions of the test object piece 1 were measured with a pair of Vernier calipers and evaluated according to the criteria described below.

[Evaluation criteria]

B: The dimensional accuracy was within ±10%.
D: The dimensional accuracy was beyond ±10%.

-Evaluation of water-disintegrability-

The obtained fibrous water-disintegrable composite material 1 was cut to have a length of 50 mm. The cut fibrous water-disintegrable composite material was immersed in ion-exchanged water (40 mL) poured in a 50 mL beaker, and left to stand still for 30 minutes with the water temperature of the ion-exchanged water set at 25 degrees C. Then, the aqueous solution in the beaker was stirred with a stirring blade at 50 rpm for 30 seconds. This aqueous solution was passed through a mesh having a mesh size of 500 micrometers, and visual observation of any residue was performed.

[Evaluation criteria]

B: There was no residue (water-disintegrability was good).
D: There was any residue (water-disintegrability was bad).

(Example 2)

A fibrous water-disintegrable composite material 2 of Example 2 was produced in the same manner as in Example 1, except that unlike in Example 1, the amount of titanium oxide was changed from 100 parts by mass to 150 parts by mass, the amount of hydrogenated castor oil was changed from 1 part by mass to 2 parts by mass, and the melting/kneading temperature was changed from 160 degrees C to 170 degrees C, and evaluated in the same manners as in Example 1. The results are presented in Table 1-1.

(Example 3)

A fibrous water-disintegrable composite material 3 of Example 3 was produced in the same manner as in Example 1, except that unlike in Example 1, the amount of titanium oxide was changed from 100 parts by mass to 200 parts by mass, the amount of hydrogenated castor oil was changed from 1 part by mass to 2 parts by mass, and the melting/kneading temperature was changed from 160 degrees C to 180 degrees C, and evaluated in the same manners as in Example 1. The results are presented in Table 1-1.

(Example 4)

A fibrous water-disintegrable composite material 4 of Example 4 was produced in the same manner as in Example 1, except that unlike in Example 1, titanium oxide (R-62N, available from Sakai Chemical Industry Co., Ltd.) (100 parts by mass) was changed to barium sulfate (B-54, available from Sakai Chemical Industry Co., Ltd.) (150 parts by mass), the amount of hydrogenated castor oil was changed from 1 part by mass to 3 parts by mass, and the melting/kneading temperature was changed from 160 degrees C to 170 degrees C, and evaluated in the same manners as in Example 1. The results are presented in Table 1-1.

(Example 5)

A fibrous water-disintegrable composite material 5 of Example 5 was produced in the same manner as in Example 1, except that unlike in Example 1, polyethylene oxide (ALKOX (registered trademark) R-1000, available from Meisei Chemical Works, Ltd.) was changed to polyethylene oxide (ALKOX (registered trademark) E-30, available from Meisei Chemical Works, Ltd.), and the melting/kneading temperature was changed from 160 degrees C to 190 degrees C, and evaluated in the same manners as in Example 1. The results are presented in Table 1-1.

(Example 6)

A fibrous water-disintegrable composite material 6 of Example 6 was produced in the same manner as in Example 1, except that unlike in Example 5, the amount of titanium oxide was changed from 100 parts by mass to 150 parts by mass and the amount of hydrogenated castor oil was changed from 1 part by mass to 2 parts by mass, and evaluated in the same manners as in Example 1. The results are presented in Table 1-1.

(Example 7)

A fibrous water-disintegrable composite material 7 of Example 7 was produced in the same manners as in Example 1, except that unlike in Example 5, the amount of titanium oxide was changed from 100 parts by mass to 200 parts by mass, the amount of hydrogenated castor oil was changed from 1 part by mass to 3 parts by mass, and the melting/kneading temperature was changed from 190 degrees C to 200 degrees C, and evaluated in the same manners as in Example 1. The results are presented in Table 1-1.

(Example 8)

A fibrous water-disintegrable composite material 8 of Example 8 was produced in the same manner as in Example 1, except that unlike in Example 1, polyethylene oxide (ALKOX (registered trademark) R-1000, available from Meisei Chemical Works, Ltd.) was changed to polyethylene oxide (ALKOX (registered trademark) E-45, available from Meisei Chemical Works, Ltd.) and the melting/kneading temperature was changed from 160 degrees C to 210 degrees C, and evaluated in the same manners as in Example 1. The results are presented in Table 1-2.

(Example 9)

A fibrous water-disintegrable composite material 9 of Example 9 was produced in the same manner as in example 8, except that unlike in Example 8, the amount of titanium oxide was changed from 100 parts by mass to 150 parts by mass and the amount of hydrogenated castor oil was changed from 1 part by mass to 2 parts by mass, and evaluated in the same manners as in Example 1. The results are presented in Table 1-2.

(Example 10)

A fibrous water-disintegrable composite material 10 of Example 10 was produced in the same manners as in Example 8, except that unlike in Example 8, the amount of titanium oxide was changed from 100 parts by mass to 200 parts by mass, the amount of hydrogenated castor oil was changed from 1 part by mass to 3 parts by mass, and the melting/kneading temperature was changed from 210 degrees C to 220 degrees C, and evaluated in the same manners as in Example 1. The results are presented in Table 1-2.

(Example 11)

A fibrous water-disintegrable composite material 11 of Example 11 was produced in the same manner as in Example 1, except that unlike in Example 1, hydroxypropyl cellulose was not added, and evaluated in the same manners as in Example 1. The results are presented in Table 1-2.

(Example 12)

A fibrous water-disintegrable composite material 12 of Example 12 was produced in the same manner as in Example 1 except that unlike in Example 1, hydrogenated castor oil was not added, and evaluated in the same manners as in Example 1. The results are presented in Table 1-2. In the evaluation of the dimensional accuracy of a three-dimensional object, production of a three-dimensional object was hard, because the melt viscosity was high and the resin discharging speed was low. However, the water-disintegrable composite material would be usable depending on the environment of use or production conditions.

(Comparative Example 1)

A fibrous water-disintegrable composite material 13 of Comparative Example 1 was produced in the same manner as in Example 1, except that unlike in Example 1, titanium oxide was not added and the melting/kneading temperature was changed from 160 degrees C to 150 degrees C, and evaluated in the same manners as in Example 1. The results are presented in Table 1-3.

(Comparative Example 2)

A fibrous water-disintegrable composite material 14 of Comparative Example 2 was produced in the same manner as in Example 1, except that unlike in Example 1, polyethylene oxide (ALKOX (registered trademark) R-1000, available from Meisei Chemical Works, Ltd.) was changed to polyvinyl alcohol (DENKA POVAL (registered trademark) B-05, available from Denka Company Limited) and the melting/kneading temperature was changed from 160 degrees C to 210 degrees C, and evaluated in the same manners as in Example 1. The results are presented in Table 1-3.

(Comparative Example 3)

An attempt was made to produce a fibrous water-disintegrable composite material of Comparative Example 5 in the same manner as in Comparative Example 2, except that unlike in Comparative Example 2, the amount of titanium oxide was changed from 100 parts by mass to 150 parts by mass. However, melting/kneading performed with a kneading/extrusion molding evaluation tester (LABPLAST MILL, available from Toyo Seiki Seisaku-Sho, Ltd.) at a screw rotation number of 15 rpm at 210 degrees C ended up in breaking of a pivot shaft due to over torque because the viscosity of the water-disintegrable composite material was high, thus failing to produce a fibrous water-disintegrable composite material 15. The results are presented in Table 1-3.

(Comparative Example 4)

A fibrous water-disintegrable composite material 16 of Comparative Example 4 was produced in the same manner as in Example 1, except that unlike in Example 1, polyethylene oxide (ALKOX (registered trademark) R-1000, available from Meisei Chemical Works, Ltd.) was changed to a butenediol/vinyl alcohol copolymer resin (GOHSENOL (registered trademark) 8164P, available from Nippon Synthetic Chemical Industry Co., Ltd.), titanium oxide, hydroxypropyl cellulose, and hydrogenated castor oil were not added, and the melting/kneading temperature was changed from 160 degrees C to 200 degrees C, and evaluated in the same manners as in Example 1. The results are presented in Table 1-3.

(Comparative Example 5)

A strand-shaped water-disintegrable composite material 17 of Comparative Example 5 was produced in the same manner as in Comparative Example 4, except that unlike in Comparative Example 4, polyethylene oxide (ALKOX (registered trademark) R-1000, available from Meisei Chemical Works, Ltd.) was changed to polyvinyl alcohol (KURARAY POVAL (registered trademark) TC253, available from Kuraray Co., Ltd.) and the extrusion molding shape was changed from the fibrous shape to a rope shape (strand shape), and evaluated in the same manners as in Comparative Example 4. The results are presented in Table 1-3.

Table 1-1

| | | | Example | | | | | | |
|---|---|---|---|---|---|---|---|---|---|
| | | | 1 | 2 | 3 | 4 | 5 | 6 | 7 |
| Material (part by mas) | Polyethylene oxide | R-1000 (Mw: 300,000) | 100 | 100 | 100 | 100 | - | - | - |
| | | E-30 (Mw: 450,000) | - | - | - | - | 100 | 100 | 100 |
| | | E-45 (Mw: 750,000) | - | - | - | - | - | - | - |
| | Inorganic compound | Titanium oxide | 100 | 150 | 200 | - | 100 | 150 | 200 |
| | | Barium sulfate | - | - | - | 150 | - | - | - |
| | Binding agent | | 10 | 10 | 10 | 10 | 10 | 10 | 10 |
| | lubricant | | 1 | 2 | 2 | 3 | 1 | 2 | 3 |
| Kneading condition | Melting/kneading temperature (degree C) | | 160 | 170 | 180 | 170 | 190 | 190 | 200 |
| Evaluation items | Moldability | | B | B | B | B | B | B | B |
| | Bend elastic constant | | B | B | B | B | B | B | B |
| | Melt fluidity | Melt flow rate (g/10 min.) | 2.0 | 1.8 | 1.8 | 1.4 | 1.5 | 1.8 | 1.8 |
| | | | B | B | B | B | B | B | B |
| | Humidity resistance | Water content increasing ratio (%) | 0.0 | 0.0 | 0.0 | 0.0 | 0.0 | 0.0 | 0.0 |
| | | | B | B | B | B | B | B | B |
| | Dimensional accuracy of 3D object | | B | B | B | B | B | B | B |
| | Water-disintegrability | | B | B | B | B | B | B | B |

Table 1-2

| | | | Example | | | | |
|---|---|---|---|---|---|---|---|
| | | | 8 | 9 | 10 | 11 | 12 |
| Material (part by mas) | Polyethylene oxide | R-1000 (Mw: 300,000) | - | - | - | 100 | 100 |
| | | E-30 (Mw: 450,000) | - | - | - | - | - |
| | | E-45 (Mw: 750,000) | 100 | 100 | 100 | - | - |
| | Inorganic compound | Titanium oxide | 100 | 150 | 200 | 100 | 100 |
| | | Barium sulfate | - | - | - | - | - |
| | Binding agent | | 10 | 10 | 10 | - | 10 |
| | lubricant | | 1 | 2 | 3 | 1 | - |
| Kneading condition | Melting/kneading temperature (degree C) | | 210 | 210 | 220 | 160 | 160 |
| Evaluation items | Moldability | | B | B | B | B | B |
| | Bendability | | B | B | B | C | B |
| | Melt fluidity | Melt flow rate (g/10 min.) | 1.6 | 1.3 | 1.3 | 1.5 | 0.8 |
| | | | B | B | B | B | C |
| | Humidity resistance | Water content increasing ratio (%) | 0.0 | 0.0 | 0.0 | 0.0 | 0.0 |
| | | | B | B | B | B | B |
| | Dimensional accuracy of 3D object | | B | B | B | B | B |
| | Water-disintegrability | | B | B | B | B | B |

Table 1-3

| | | | Comparative Example | | | | |
|---|---|---|---|---|---|---|---|
| | | | 1 | 2 | 3 | 4 | 5 |
| Material (part by mas) | Polyethylene oxide | R-1000 (Mw: 300,000) | 100 | - | - | - | - |
| | Comparative water-soluble resin | Polyvinyl alcohol POVAL B-05 | - | 100 | 100 | - | - |
| | | Butenediol/vinyl alcohol copolymer resin GOHSENOL 8164P | - | - | - | 100 | - |
| | | Polyvinyl alcohol KURARAY POVAL TC253 | - | - | - | - | 100 |
| | Inorganic compound | Titanium oxide | - | 100 | 150 | - | - |
| | | Barium sulfate | - | - | - | - | - |
| | Binding agent | | 10 | 10 | 10 | - | - |
| | lubricant | | 1 | 1 | 1 | - | - |
| Kneading condition | Melting/kneading temperature (degree C) | | 150 | 210 | 210 | 200 | 200 |

(continued)

| Evaluation items | | | Comparative Example | | | | |
|---|---|---|---|---|---|---|---|
| | | | 1 | 2 | 3 | 4 | 5 |
| | Moldability | | B | B | - | B | B |
| | Bendability | | B | D | - | B | B |
| | Melt fluidity | Melt flow rate (g/10 min.) | 18 | 0.2 | - | 0.4 | 6.0 |
| | | | B | D | - | D | B |
| | Humidity resistance | Water content increasing ratio (%) | 0.0 | 21 | - | 11 | 28 |
| | | | B | D | - | D | D |
| | Dimensional accuracy of 3D object | | B | B | - | B | B |
| | Water-disintegrability | | D | D | - | D | D |

In Table 1-1 to Table 1-3, the product name, the supplier name, and the weight average molecular weight Mw of polyethylene oxide are as follows.

- R-1000: ALKOX (registered trademark) R-1000, available from Meisei Chemical Works, Ltd., weight average molecular weight Mw of 300,000
- E-30: ALKOX (registered trademark) E-30, available from Meisei Chemical Works, Ltd., weight average molecular weight Mw of 450,000
- E-45: ALKOX (registered trademark) E-45, available from Meisei Chemical Works, Ltd., weight average molecular weight Mw of 750,000

From the results of Table 1-1 to Table 1-3, it was found that the water-disintegrable composite materials of the present invention according to Examples 1 to 10 further containing an inorganic compound, a binding agent, and a lubricant in addition to polyethylene oxide had an excellent water-disintegrability, and were relatively good in moldability, bendability, melt fluidity, and humidity resistance. It was found that Example 11 free of the binding agent achieved a grade "C" poorer than Examples 1 to 10 in the bendability evaluation. It was found that Example 12 free of the lubricant achieved a grade "C" poorer than Examples 1 to 10 in the melt fluidity evaluation.

It was found that Comparative Example 1 free of the inorganic compound was poorer in water-disintegrability than Examples 1 to 12. It was found that Comparative Examples 2 to 5 containing other water-soluble resins instead of polyethylene oxide achieved a grade "D" poorer than Examples 1 to 12 in at least the humidity resistance and water-disintegrability evaluations.

(Example 101)

<Production of water-disintegrable composite material>

Polyethylene oxide (ALKOX (registered trademark) E-30, available from Meisei Chemical Works, Ltd.) (50 parts by mass) and polyvinyl alcohol (JL-05E, available from Japan Vam & Poval Co., Ltd.) (50 parts by mass), and relative to a total of 100 parts by mass of these materials, titanium oxide as an inorganic compound (R-62N, available from Sakai Chemical Industry Co., Ltd.) (25 parts by mass), and glycerin monostearate as a lubricant (S-100, available from Riken Vitamin Co., Ltd.) (15 parts by mass) were put in a plastic container having a volume of 2,000 mL, and mixed and stirred with a big rotor (BR-2, available from As One Corporation) at 10 rpm for 1 hour. Subsequently, with a kneading/extrusion molding evaluation tester (LABPLAST MILL, available from Toyo Seiki Seisaku-Sho, Ltd.), the resultant was melted and kneaded at a screw rotation number of 15 rpm at a cylinder temperature of 190 degrees C, and extrusion-molded into a fibrous shape having a diameter of 1.8 mm.

Next, the fibrous extrusion-molded product was stretched and conveyed while being cooled and solidified with dry air, and wound up around a core with a winder produced in-house. In this way, a fibrous water-disintegrable composite material 101 was obtained.

Next, various properties of the obtained water-disintegrable composite material 101 were evaluated in the manners described below. The results are presented in Table 2.

-Evaluation of moldability-

Moldability when the components were mixed with a blender and subsequently melted and kneaded with the kneading/extrusion molding evaluation tester at a screw rotation number of 15 rpm at a cylinder temperature of 190 degrees C was evaluated according to the criteria described below.

[Evaluation criteria]

B: The components were able to be molded into a fibrous shape having a diameter of 1.8 mm.
D: The components were not able to be molded into a fibrous shape having a diameter of 1.8 mm.

-Evaluation of bendability-

The obtained fibrous water-disintegrable composite material 101 was cut to have a length of 100 mm and bent by 360 degrees at the center of the loner direction, followed by compression of the bent portion by fingers, and then bent in an opposite direction, followed by compression likewise. The bent portion was observed with an optical microscope (BX51, available from Olympus Corporation) at an object lens magnification of ×10 and an eyepiece lens magnification of ×5, and evaluated according to the criteria described below.

[Evaluation criteria]

B: At least one of cracking and breaking was not observed.
C: Minute cracks were observed at some part, but were not problematic in practical use.
D: At least one of cracking and breaking was observed.

-Evaluation of melt fluidity-

The melt flow rate of the obtained fibrous water-disintegrable composite material 101 was measured with a melt indexer (LMI5000, available from Dynisco, compliant with JIS K7210) at a temperature of 190 degrees C at a load of 2.18 kg, and evaluated according to the criteria described below.

[Evaluation criteria]

B: The melt flow rate was greater than or equal to 1.0 g/10 minutes.
C: The melt flow rate was greater than or equal to 0.5 g/10 minutes but less than 1.0 g/10 minutes.
D: The melt flow rate was less than 0.5 g/10 minutes.

-Evaluation of mechanical strength-

With a tensile tester (available from Shimadzu Corporation), the tensile modulus and the tensile elongation of the obtained fibrous water-disintegrable composite material 101 were measured according to a method described in ICE60851, and the bend elastic constant of the obtained fibrous water-disintegrable composite material 101 was measured according to a method described in JIS K7171.

-Evaluation of water-disintegrability-

The obtained fibrous water-disintegrable composite material 101 was cut to have a length of 50 mm. The cut fibrous water-disintegrable composite material was immersed in ion-exchanged water (40 mL) poured in a 50 mL beaker, and left to stand still for 60 minutes with the water temperature of the ion-exchanged water set at 25 degrees C. Then, the aqueous solution in the beaker was stirred with a stirring blade at 50 rpm for 30 seconds. This aqueous solution was passed through a mesh having a mesh size of 500 micrometers, and visual observation of any residue was performed.

[Evaluation criteria]

B: There was no residue (water-disintegrability was good).
D: There was any residue (water-disintegrability was bad).

(Example 102)

A fibrous water-disintegrable composite material 102 was produced in the same manner as in Example 101, except that unlike in Example 101, the amount of polyethylene oxide (ALKOX (registered trademark) E-30, available from Meisei Chemical Works, Ltd.) was changed to 35 parts by mass, the amount of polyvinyl alcohol (JL-05E, available from Japan Vam & Poval Co., Ltd.) was changed to 65 parts by mass, and relative to a total of 100 parts by mass of these components, the amount of titanium oxide as an inorganic compound (R-62N, available from Sakai Chemical Industry Co., Ltd.) was changed to 20 parts by mass, and the amount of glycerin monostearate as a lubricant (S-100, available from Riken Vitamin Co., Ltd.) was changed to 20 parts by mass, and evaluated in the same manners as in Example 101. The results are presented in Table 2.

(Example 103)

A fibrous water-disintegrable composite material 103 was produced in the same manner as in Example 101, except that unlike in Example 101, titanium oxide as an inorganic compound was changed to barium sulfate (B-54, available from Sakai Chemical Industry Co., Ltd.) (25 parts by mass), and evaluated in the same manners as in Example 101. The results are presented in Table 2.

(Example 104)

A fibrous water-disintegrable composite material 104 was produced in the same manner as in Example 101, except that unlike in Example 101, the addition amount of polyethylene oxide was changed to 65 parts by mass and the addition amount of polyvinyl alcohol was change to 35 parts by mass, and evaluated in the same manners as in Example 101. The results are presented in Table 2.

(Example 105)

A fibrous water-disintegrable composite material 105 was produced in the same manner as in Example 101, except that unlike in Example 101, the addition amount of titanium oxide was changed to 50 parts by mass, and evaluated in the same manners as in Example 101. The results are presented in Table 3.

(Example 106)

A fibrous water-disintegrable composite material 106 was produced in the same manner as in Example 101, except that unlike in Example 101, the addition amount of glycerin monostearate was changed to 30 parts by mass, and evaluated in the same manners as in Example 101. The results are presented in Table 3.

(Comparative Example 101)

A fibrous water-disintegrable composite material 107 was produced in the same manner as in Example 101, except that unlike in Example 101, glycerin monostearate was not added, and evaluated in the same manners as in Example 101. The results are presented in Table 4.

(Comparative Example 102)

A fibrous water-disintegrable composite material 108 was produced in the same manner as in Example 101, except that unlike in Example 101, titanium oxide was not added, and evaluated in the same manners as in Example 101. The results are presented in Table 4.

(Comparative Example 103)

A fibrous water-disintegrable composite material 109 was produced in the same manner as in Example 101, except that unlike in Example 101, the addition amount of titanium oxide was changed from 10 parts by mass to 100 parts by mass, and evaluated in the same manners as in Example 101. The results are presented in Table 4.

(Comparative Example 104)

A fibrous water-disintegrable composite material 110 was produced in the same manner as in Example 101, except that unlike in Example 101, the addition amount of titanium oxide was changed from 10 parts by mass to 100 parts by mass and monoglycerin stearate was not added, and evaluated in the same manners as in Example 101. The results are presented in Table 4.

(Comparative Example 105)

A fibrous water-disintegrable composite material 111 was produced in the same manner as in Example 101, except that unlike in Example 101, titanium oxide and monoglycerin stearate were not added, and evaluated in the same manners as in Example 101. The results are presented in Table 5.

(Comparative Example 106)

A fibrous water-disintegrable composite material 112 was produced in the same manner as in Example 101, except that unlike in Example 101, the amount of polyethylene oxide was changed to 90 parts by mass, the amount of polyvinyl alcohol was changed to 10 parts by mass, and relative to a total of 100 parts by mass of these components, the amount of titanium oxide as an inorganic compound was changed to 15 parts by mass, and the amount of glycerin monostearate as a lubricant was changed to 15 parts by mass, and evaluated in the same manners as in Example 101. The results are presented in Table 5.

Table 2

|  |  |  | Example | | | |
|---|---|---|---|---|---|---|
|  |  |  | 101 | 102 | 103 | 104 |
| Component (part by mas) | Polyethylene oxide | | 50 | 35 | 50 | 65 |
|  | Polyvinyl alcohol | | 50 | 65 | 50 | 35 |
|  | Inorganic compound | Titanium oxide | 25 | 20 | - | 25 |
|  |  | Barium sulfate | - | - | 25 | - |
|  | Lubricant | Glycerin monostearate | 15 | 20 | 15 | 15 |
| Kneading condition | Melting/kneading temperature (degree C) | | 190 | 190 | 190 | 190 |
| Evaluation items | Moldability | | B | B | B | B |
|  | Bendability | | B | B | B | B |
|  | Mechanical strength | Tensile modulus (GPa) | 1.6 | 1.7 | 1.6 | 1.1 |
|  |  | Tensile elongation (%) | 75 | 80 | 55 | 45 |
|  |  | Bend elastic constant (GPa) | 1.7 | 2.0 | 1.7 | 1.3 |
|  | Water-disintegrability after 60 minutes | | B | B | B | B |
|  | Fluidity (190 degrees C) | Melt flow rate (g/10 min.) | 3.0 | 3.9 | 3.8 | 4.2 |
|  |  | Judgment | B | B | B | B |

Table 3

| | | | Example | |
|---|---|---|---|---|
| | | | 105 | 106 |
| Component (part by mas) | Polyethylene oxide | | 50 | 50 |
| | Polyvinyl alcohol | | 50 | 50 |
| | Inorganic compound | Titanium oxide | 50 | 15 |
| | | Barium sulfate | - | - |
| | Lubricant | Glycerin monostearate | 15 | 30 |
| Kneading condition | Melting/kneading temperature (degree C) | | 190 | 190 |
| Evaluation items | Moldability | | B | B |
| | Bendability | | B | B |
| | Mechanical strength | Tensile modulus (GPa) | 1.9 | 1.5 |
| | | Tensile elongation (%) | 35 | 105 |
| | | Bend elastic constant (GPa) | 2.1 | 1.7 |
| | Water-disintegrability after 60 minutes | | B | B |
| | Fluidity (190 degrees C) | Melt flow rate (g/10 min.) | 1.9 | 7.0 |
| | | Judgment | B | B |

Table 4

| | | | Comparative Example | | | |
|---|---|---|---|---|---|---|
| | | | 101 | 102 | 103 | 104 |
| Component (part by mas) | Polyethylene oxide | | 50 | 50 | 50 | 50 |
| | Polyvinyl alcohol | | 50 | 50 | 50 | 50 |
| | Inorganic compound | Titanium oxide | 25 | - | 100 | 100 |
| | | Barium sulfate | - | - | - | - |
| | Lubricant | Glycerin monostearate | - | 15 | 15 | - |
| Kneading condition | Melting/kneading temperature (degree C) | | 190 | 190 | 210 | 210 |
| Evaluation items | Moldability | | B | B | B | D |
| | Bendability | | B | B | D | - |
| | Mechanical strength | Tensile modulus (GPa) | 1.7 | 1.4 | - | - |
| | | Tensile elongation (%) | 62 | 95 | - | - |
| | | Bend elastic constant (GPa) | 1.7 | 1.5 | - | - |
| | Water-disintegrability after 60 minutes | | D | D | - | - |
| | Fluidity (190 degrees C) | Melt flow rate (g/10 min.) | 0.3 | 6.8 | - | - |
| | | Judgment | B | B | - | - |

*In Table 4, "-" in the evaluation items indicates that the evaluation items were unmeasurable.

Table 5

| | | | Comparative Example | |
|---|---|---|---|---|
| | | | 105 | 106 |
| Component (part by mas) | Polyethylene oxide | | 50 | 90 |
| | Polyvinyl alcohol | | 50 | 10 |
| | Inorganic compound | Titanium oxide | - | 15 |
| | | Barium sulfate | - | - |
| | Lubricant | Glycerin monostearate | - | 15 |
| Kneading condition | Melting/kneading temperature (degree C) | | 190 | 190 |
| Evaluation items | Moldability | | B | B |
| | Bendability | | B | B |
| | Mechanical strength | Tensile modulus (GPa) | 1.7 | 0.9 |
| | | Tensile elongation (%) | 98 | 85 |
| | | Bend elastic constant (GPa) | 1.7 | 0.9 |
| | Water-disintegrability after 60 minutes | | D | B |
| | Fluidity (190 degrees C) | Melt flow rate (g/10 min.) | 0.9 | 4.5 |
| | | Judgment | B | B |

From the results of Table 2 to Table 5, it was found that the water-disintegrable composite materials of Examples 101 to 106 further containing an inorganic compound and a lubricant in addition to polyethylene oxide and polyvinyl alcohol had an excellent water-disintegrability, and were good in all of moldability, bendability, mechanical strength, and melt fluidity.

As compared, it was found that Comparative Example 101 free of the inorganic compound achieved a grade "D" poorer than Examples 101 to 106 in the fluidity evaluation.

It was found that Comparative Example 102 free of the lubricant achieved a grade "D" poorer than Examples 101 to 106 in the evaluation of water-disintegrability after 60 minutes.

It was found that Comparative Example 103 containing 100 parts by mass of titanium oxide as the inorganic compound achieved a grade "D" poorer than Examples 101 to 106 in the bendability evaluation.

It was found that Comparative Example 104 containing 100 parts by mass of titanium oxide as the inorganic compound and free of the lubricant achieved a grade "D" poorer than Examples 101 to 106 in the moldability evaluation.

(Example 107)

Using the water-disintegrable composite materials of Examples 101 to 106, three-dimensional objects were produced with PRN3D (available from Micro Factory Corp.), which was a FDM-type 3D printer.

Set conditions include a discharging nozzle temperature of 220 degrees C and an object producing speed of 75 mm/s.

As a result, it was possible to efficiently produce cylindrical objects having a diameter of 500 mm and a height of 10 mm with all of the water-disintegrable composite materials.

Aspects of the present invention are as follows, for example.

<1> A water-disintegrable composite material either including
polyethylene oxide,
wherein the water-disintegrable composite material satisfies all of A), B), and C) below,
or including:

polyethylene oxide; and
polyvinyl alcohol,

wherein the water-disintegrable composite material satisfies all of A), B), D), and E) below,

A) when the water-disintegrable composite material having a fibrous shape having a diameter of 1.8 mm and a length of 50 mm is immersed in ion-exchanged water of 25 degrees C, the water-disintegrable composite material undergoes shape disintegration within 60 minutes,

B) a melt flow rate of the water-disintegrable composite material when measured according to a method described in JIS K7210, at a temperature of 190 degrees C, and at a load of 2.18 kg is greater than or equal to 0.5 g/10 minutes,

C) a water content A and a water content B of the water-disintegrable composite material having a fibrous shape having a diameter of 1.8 mm and a length of 5.0 mm satisfy a formula below,

water content increasing ratio = [(B-A)/A]$\times$100$\leq$1%,

where the water content A is a water content of the water-disintegrable composite material after dried at 80 degrees C for 2 hours and then left to stand in an environment of 23 degrees C and 50% RH for 12 hours, and the water content B is a water content of the water-disintegrable composite material after further left to stand in an environment of 30 degrees C and 50% RH for 72 hours,

D) tensile modulus of the water-disintegrable composite material according to a method described in ICE60851 is 1.0 GPa or higher, and tensile elongation of the water-disintegrable composite material according to a method described in ICE60851 is 10% or higher, and

E) bend elastic constant of the water-disintegrable composite material according to a method described in JIS K7171 is 1.0 GPa or higher.

<2> The water-disintegrable composite material according to <1>, wherein A) is a condition that when the water-disintegrable composite material having a fibrous shape having a diameter of 1.8 mm and a length of 50 mm is immersed in ion-exchanged water of 25 degrees C, the water-disintegrable composite material undergoes shape disintegration within 30 minutes.

<3> The water-disintegrable composite material according to <1> or <2>, further including one or more selected from the group consisting of an inorganic compound, a binding agent, and a lubricant.

<4> The water-disintegrable composite material according to <3>, wherein the inorganic compound includes any one of titanium oxide and barium sulfate.

<5> The water-disintegrable composite material according to <3> or <4>, wherein a content of the inorganic compound is 100 parts by mass or greater relative to 100 parts by mass of the polyethylene oxide, or when the water-disintegrable composite material includes the polyvinyl alcohol in addition to the polyethylene oxide, the content of the inorganic compound is 50 parts by mass or less relative to a total of 100 parts by mass of the polyethylene oxide and the polyvinyl alcohol.

<6> The water-disintegrable composite material according to any one of <3> to <5>, wherein a content of the binding agent is 1 part by mass or greater but 10 parts by mass or less relative to 100 parts by mass of the polyethylene oxide.

<7> The water-disintegrable composite material according to any one of <3> to <6>, wherein a content of the lubricant is 1 part by mass or greater but 30 parts by mass or less relative to 100 parts by mass of the polyethylene oxide.

<8> The water-disintegrable composite material according to any one of <3> to <7>, wherein the lubricant is glycerin fatty acid ester.

<9> The water-disintegrable composite material according to any one of <1> to <8>, wherein the polyethylene oxide has a weight average molecular weight of 50,000 or greater but 1,000,000 or less.

<10> The water-disintegrable composite material according to any one of <1> to <9>, wherein the water-disintegrable composite material has a fibrous shape.

<11> The water-disintegrable composite material according to any one of <1> to <10>, wherein the water-disintegrable composite material is intended for supporting a three-dimensional object for producing the three-dimensional object.

<12> A water-disintegrable composite material either including polyethylene oxide, wherein the water-disintegrable composite material further includes one or more selected from the group consisting of an inorganic compound, a binding agent, and a lubricant, or including:

polyethylene oxide; and
polyvinyl alcohol,

wherein the water-disintegrable composite material further includes at least one selected from the group consisting of an inorganic compound and a lubricant.

<13> The water-disintegrable composite material according to any one of <1> to <12>, wherein a content of the polyvinyl alcohol is 50 parts by mass or greater but 150 parts by mass or less relative to 100 parts by mass of the polyethylene oxide.

<14> The water-disintegrable composite material according to <12> or <13>, wherein when the water-disintegrable composite material having a fibrous shape having a diameter of 1.8 mm and a length of 50 mm is immersed in ion-exchanged water of 25 degrees C, the water-disintegrable composite material undergoes shape disintegration within 60 minutes.

<15> The water-disintegrable composite material according to any one of <12> to <14>, wherein a melt flow rate of the water-disintegrable composite material when measured according to a method described in JIS K7210, at a temperature of 190 degrees C, and at a load of 2.18 kg is greater than or equal to 0.5 g/10 minutes.

<16> The water-disintegrable composite material according to any one of <12> to <15>, wherein a water content A and a water content B of the water-disintegrable composite material having a fibrous shape having a diameter of 1.8 mm and a length of 5.0 mm satisfy a formula below,

water content increasing ratio = $[(B-A)/A] \times 100 \leq 1\%$,

where the water content A is a water content of the water-disintegrable composite material after dried at 80 degrees C for 2 hours and then left to stand in an environment of 23 degrees C and 50% RH for 12 hours, and the water content B is a water content of the water-disintegrable composite material after further left to stand in an environment of 30 degrees C and 50% RH for 72 hours.

<17> The water-disintegrable composite material according to any one of <12> to <16>, wherein tensile modulus and tensile elongation of the water-disintegrable composite material according to a method described in ICE60851 are 1.0 GPa or higher and 10% or higher.

<18> A three-dimensional object producing method including a step of producing a three-dimensional object using the water-disintegrable composite material according to any one of <1> to <17>.

<19> A three-dimensional object producing method including:

a step of producing a three-dimensional object and a support for supporting the three-dimensional object; and a step of immersing the obtained three-dimensional object and the support in water to disintegrate and remove the support, wherein the support is formed using the water-disintegrable composite material according to any one of <1> to <17>.

<20> The three-dimensional object producing method according to <19>, including a step of producing a three-dimensional object using the water-disintegrable composite material, and a step of applying water to the three-dimensional object to dissolve and remove a part of the three-dimensional object.

The water-disintegrable composite material according to any one of <1> to <17> and the three-dimensional object producing method according to any one of <18> to <20> can solve the various problems in the related art and can achieve the object of the present invention.

Description of the Reference Numeral

50:     support forming material
51:     three-dimensional object
101:    melting/kneading extruder
102:    belt-type conveyor
103:    winder
104:    fibrous water-disintegrable composite material
105:    dome
W:      water

**Claims**

1. A water-disintegrable composite material either comprising polyethylene oxide,
   wherein the water-disintegrable composite material satisfies all of A), B), and C) below,
   or comprising:

   polyethylene oxide; and
   polyvinyl alcohol,

   wherein the water-disintegrable composite material satisfies all of A), B), D), and E) below,

   A) when the water-disintegrable composite material having a fibrous shape having a diameter of 1.8 mm and a length of 50 mm is immersed in ion-exchanged water of 25 degrees C, the water-disintegrable composite material undergoes shape disintegration within 60 minutes,
   B) a melt flow rate of the water-disintegrable composite material when measured according to a method described in JIS K7210, at a temperature of 190 degrees C, and at a load of 2.18 kg is greater than or equal to 0.5 g/10 minutes,
   C) a water content A and a water content B of the water-disintegrable composite material having a fibrous shape having a diameter of 1.8 mm and a length of 5.0 mm satisfy a formula below,

   $$\text{water content increasing ratio} = [(B-A)/A]\times 100 \leq 1\%,$$

   where the water content A is a water content of the water-disintegrable composite material after dried at 80 degrees C for 2 hours and then left to stand in an environment of 23 degrees C and 50% RH for 12 hours, and the water content B is a water content of the water-disintegrable composite material after further left to stand in an environment of 30 degrees C and 50% RH for 72 hours,
   D) tensile modulus of the water-disintegrable composite material according to a method described in ICE60851 is 1.0 GPa or higher, and tensile elongation of the water-disintegrable composite material according to a method described in ICE60851 is 10% or higher, and
   E) bend elastic constant of the water-disintegrable composite material according to a method described in JIS K7171 is 1.0 GPa or higher.

2. The water-disintegrable composite material according to claim 1,
   wherein A) is a condition that when the water-disintegrable composite material having a fibrous shape having a diameter of 1.8 mm and a length of 50 mm is immersed in ion-exchanged water of 25 degrees C, the water-disintegrable composite material undergoes shape disintegration within 30 minutes.

3. The water-disintegrable composite material according to claim 1 or 2, further comprising
   one or more selected from the group consisting of an inorganic compound, a binding agent, and a lubricant.

4. The water-disintegrable composite material according to claim 3,
   wherein the inorganic compound comprises any one of titanium oxide and barium sulfate.

5. The water-disintegrable composite material according to claim 3 or 4,
   wherein a content of the inorganic compound is 100 parts by mass or greater relative to 100 parts by mass of the polyethylene oxide, or when the water-disintegrable composite material comprises the polyvinyl alcohol in addition to the polyethylene oxide, the content of the inorganic compound is 50 parts by mass or less relative to a total of 100 parts by mass of the polyethylene oxide and the polyvinyl alcohol.

6. The water-disintegrable composite material according to any one of claims 3 to 5, wherein a content of the binding agent is 1 part by mass or greater but 10 parts by mass or less relative to 100 parts by mass of the polyethylene oxide.

7. The water-disintegrable composite material according to any one of claims 3 to 6, wherein a content of the lubricant is 1 part by mass or greater but 30 parts by mass or less relative to 100 parts by mass of the polyethylene oxide.

8. The water-disintegrable composite material according to any one of claims 3 to 7, wherein the lubricant comprises glycerin fatty acid ester.

9. The water-disintegrable composite material according to any one of claims 1 to 8, wherein the polyethylene oxide has a weight average molecular weight of 50,000 or greater but 1,000,000 or less.

10. The water-disintegrable composite material according to any one of claims 1 to 9, wherein the water-disintegrable composite material has a fibrous shape.

11. The water-disintegrable composite material according to any one of claims 1 to 10, wherein the water-disintegrable composite material is intended for supporting a three-dimensional object for producing the three-dimensional object.

12. A water-disintegrable composite material either comprising polyethylene oxide,
wherein the water-disintegrable composite material further comprises one or more selected from the group consisting of an inorganic compound, a binding agent, and a lubricant,
or comprising:

   polyethylene oxide; and
   polyvinyl alcohol,

wherein the water-disintegrable composite material further comprises at least one selected from the group consisting of an inorganic compound and a lubricant.

13. The water-disintegrable composite material according to any one of claims 1 to 12, wherein a content of the polyvinyl alcohol is 50 parts by mass or greater but 150 parts by mass or less relative to 100 parts by mass of the polyethylene oxide.

14. The water-disintegrable composite material according to claim 12 or 13,
wherein when the water-disintegrable composite material having a fibrous shape having a diameter of 1.8 mm and a length of 50 mm is immersed in ion-exchanged water of 25 degrees C, the water-disintegrable composite material undergoes shape disintegration within 60 minutes.

15. The water-disintegrable composite material according to any one of claims 12 to 14, wherein a melt flow rate of the water-disintegrable composite material when measured according to a method described in JIS K7210, at a temperature of 190 degrees C, and at a load of 2.18 kg is greater than or equal to 0.5 g/10 minutes.

16. The water-disintegrable composite material according to any one of claims 12 to 15, wherein a water content A and a water content B of the water-disintegrable composite material having a fibrous shape having a diameter of 1.8 mm and a length of 5.0 mm satisfy a formula below,

$$\text{water content increasing ratio} = [(B-A)/A] \times 100 \leq 1\%,$$

where the water content A is a water content of the water-disintegrable composite material after dried at 80 degrees C for 2 hours and then left to stand in an environment of 23 degrees C and 50% RH for 12 hours, and the water content B is a water content of the water-disintegrable composite material after further left to stand in an environment of 30 degrees C and 50% RH for 72 hours.

17. The water-disintegrable composite material according to any one of claims 12 to 16, wherein tensile modulus and tensile elongation of the water-disintegrable composite material according to a method described in ICE60851 are 1.0 GPa or higher and 10% or higher.

18. A three-dimensional object producing method comprising
producing a three-dimensional object using the water-disintegrable composite material according to any one of claims 1 to 17.

19. A three-dimensional object producing method comprising:

producing a three-dimensional object and a support for supporting the three-dimensional object; and immersing the obtained three-dimensional object and the support in water to disintegrate and remove the support, wherein the support is formed using the water-disintegrable composite material according to any one of claims 1 to 17.

# FIG. 1

101

Dry air

105

104

103

102

# FIG. 2A

50

A

A

# FIG. 2B

# FIG. 2C

# FIG. 3

# FIG. 4

# FIG. 5

## INTERNATIONAL SEARCH REPORT

International application No.

PCT/JP2016/085538

| A. CLASSIFICATION OF SUBJECT MATTER |
| --- |
| *C08L71/02*(2006.01)i, *B29C67/00*(2017.01)i, *B33Y10/00*(2015.01)i, *B33Y70/00*(2015.01)i, *C08K3/22*(2006.01)i, *C08K3/30*(2006.01)i |

According to International Patent Classification (IPC) or to both national classification and IPC

| B. FIELDS SEARCHED |
| --- |
| Minimum documentation searched (classification system followed by classification symbols) |
| C08L71/02, B29C67/00, B33Y10/00, B33Y70/00, C08K3/22, C08K3/30 |

Documentation searched other than minimum documentation to the extent that such documents are included in the fields searched
Jitsuyo Shinan Koho      1922–1996   Jitsuyo Shinan Toroku Koho   1996–2017
Kokai Jitsuyo Shinan Koho   1971–2017   Toroku Jitsuyo Shinan Koho   1994–2017

Electronic data base consulted during the international search (name of data base and, where practicable, search terms used)

| C. DOCUMENTS CONSIDERED TO BE RELEVANT |

| Category* | Citation of document, with indication, where appropriate, of the relevant passages | Relevant to claim No. |
| --- | --- | --- |
| X<br>A | JP 9-012819 A  (Sumitomo Chemical Co., Ltd.),<br>14 January 1997 (14.01.1997),<br>claims; paragraphs [0006] to [0008], [0017];<br>examples<br>(Family: none) | 1-10,12-17<br>11,18,19 |
| A | JP 7-275699 A  (Sumitomo Seika Chemicals Co., Ltd.),<br>24 October 1995 (24.10.1995),<br>entire text<br>(Family: none) | 1-19 |
| A | JP 2001-162708 A  (Kao Corp.),<br>19 June 2001 (19.06.2001),<br>entire text<br>& WO 2001/023460 A1 | 1-19 |

| ☒ Further documents are listed in the continuation of Box C. | ☐ See patent family annex. |

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>17 February 2017 (17.02.17) | Date of mailing of the international search report<br>28 February 2017 (28.02.17) |
| --- | --- |
| Name and mailing address of the ISA/<br>Japan Patent Office<br>3-4-3,Kasumigaseki,Chiyoda-ku,<br>Tokyo 100-8915,Japan | Authorized officer<br><br>Telephone No. |

Form PCT/ISA/210 (second sheet) (January 2015)

**INTERNATIONAL SEARCH REPORT**

| International application No. |
| --- |
| PCT/JP2016/085538 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2003-041142 A  (Mitsui Chemicals, Inc.), 13 February 2003 (13.02.2003), entire text (Family: none) | 1-19 |
| A | JP 2012-158658 A  (Unitika Ltd.), 23 August 2012 (23.08.2012), entire text (Family: none) | 1-19 |
| A | JP 6-032863 A  (Sumitomo Seika Chemicals Co., Ltd.), 08 February 1994 (08.02.1994), entire text (Family: none) | 1-19 |
| A | JP 7-048475 A  (Phillips Petroleum Co.), 21 February 1995 (21.02.1995), entire text & US 5391359 A entire text & US 5637635 A entire text & EP 608898 A1          & CN 1094418 A | 1-19 |
| A | JP 2009-501743 A  (Bayer Schering Pharma AG.), 22 January 2009 (22.01.2009), entire text & US 2007/0014839 A1 entire text & WO 2007/009730 A2 | 1-19 |
| P,A | JP 2016-056353 A  (Ricoh Co., Ltd.), 21 April 2016 (21.04.2016), entire text & US 2016/0068671 A1 entire text & EP 2993020 A1          & CN 105400108 A | 1-19 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 8092453 A